# EUROPEAN PATENT SPECIFICATION

(11) **EP 2 375 107 B1**
(45) Date of publication and mention of the grant of the patent: **06.04.2016**
(21) Application number: 11161635.5
(22) Date of filing: 08.04.2011
(51) Int. Cl.: F16H 57/04

(54) **Active cooling system for drive components of vehicles.**
Aktives Kühlsystem für Antriebskomponenten von Fahrzeugen
Système de refroidissement actif pour des composants de l'entraînement de véhicules

(30) Priority: 12.04.2010 IT TO20100281
(43) Date of publication of application: 12.10.2011
(73) Proprietor: CNH Industrial Österreich GmbH, 4300 St. Valentin (AT)
(72) Inventor: Huber, Roland, 4391, Waldhausen (AT); Mayr, Josef, 4841, Ungenach (AT); Monschein, Johann, 3351, Weistrach (AT)
(74) Representative: CNH Industrial IP Department

(56) References cited:
- EP-A1- 2 161 479
- WO-A1-2005/116491
- US-A1- 2002 077 210
- US-B1- 6 997 238

## Description

The present invention relates to an active cooling system for drive components of vehicles and control method therefore.

With increasing the installed power on the vehicles the magnitude of power losses rises. There are losses in the engine, the drive line and the additional outputs to drive different implements. With industrial or agricultural vehicles, examples of these outputs are the front or rear PTO, the steering gear, clutches, and the front and rear differential gearbox. These components comprise a plurality of meshing gears and bearings. The losses result from the not ideal efficiency of the gearings, bearings, lubricating media and many others. Efforts have been made to reduce these losses, but there is a limit to increase the efficiency for these parts with reasonable cost. Further, heat may be produced by clutches partially integrated into the gearboxes. To prevent the gearboxes from overheating, there have to be cooling systems.

The drive lines of vehicles having a higher installed power are conventionally provided with at least one drive line cooling circuit which transports the heat for instance from the main gearbox to a radiator mounted on the vehicle and cooled by natural or forced air flow. Many vehicle having a high installed power are provided wit two or more cooling circuits, for instance separate high and low pressure cooling circuits each including a separate radiator.

An often preferred passive cooling system for additional or auxiliary components is realized by means of ribs on the outer side of the components involved, for instance a gearbox. This increases the surface which can transfer heat to the environment. With this solution a point of economic viability is reached soon. As the gearbox is in an exposed position, it is not possible to prevent it from becoming dirty, especially with agricultural vehicles. The dirt insulates the gearbox and lowers the ability to exchange the heat.

A further possibility is to install a separate cooling system for the oil of a gearbox or other additional components. This system requires, in addition to an additional radiator, a hydraulic circuit, containing at least a pump. The additional radiator has to be situated in most cases near the radiator package of the engine. In this area, no much space is available. This affects probably the needed space under the hood in the front area. As the available unoccupied space normally is quite limited in this area, it is preferred not to position an additional radiator in this area. Apart therefrom, the additional hydraulic circuit and the additional radiator are increasing the costs of the system. Further the efforts for cleaning to be performed by the operator are rising.

EP 2 161 479 A1 disclose a gearbox housing that is provided with a cooling covering to influence the gear oil as a constituent part of a liquid cooling system, and a coolant channel. An inlet is provided for supplying the coolant to the cooling covering and an outlet is provided for discharging the coolant. The document discloses the features of the preambles of claim 1 and 11.

The present invention is aimed to an improved cooling system for components of vehicles other than the drive line thereof having an improved cooling efficiency with lower cost and not prone to be impaired by environmental effects.

According to one aspect of the present invention, an improved active cooling system as defined in claim 1 is provided.

According to another aspect of the invention, a method of active cooling components of vehicles is provided as set out in claim 11.

Preferred developments and embodiments of the invention are set out in the subclaims.

According to the present invention, a heat exchanger is disposed directly on the component to be cooled, for instance a gearbox, preferably next to the hottest area of the component, and the heat exchanger is arranged to be included in the at least one oil cooling circuit of the drive line provided for transporting the heat from the drive line of the vehicle to a radiator.

According to an embodiment of the present invention, this at least one oil cooling circuit is a primary oil cooling circuit transporting heat from the main drive line to a radiator mounted to the vehicle, but other existing oil cooling circuits of the vehicle may be used as well.

According to one embodiment of the invention, the heat exchanger is a separate part which is mounted onto a machined surface of the component to be cooled. In this manner, a retrofit solution is provided, giving the operator the possibility to increase the maximum permanent power provided by the component without overheating the system.

According to a further embodiment of the invention, the heat exchanger is integrated into the respective component. This increases the efficiency of heat flow. Again, the maximum permanent power provided by the component may be increased without overheating the system.

The cooling system therefore may comprise a heat exchanger fully integrated into a gearbox or any other component requiring cooling, or partially integrated by flanging a heat exchanger to a machined surface of the component. In any case, the heat exchanger is part of an existing oil circuit which is provided for transporting the heat from the drive line including for instance the main gearbox of the vehicle to a radiator mounted on the vehicle and cooled by natural or forced air flow.

In an embodiment wherein the component to be cooled is a front axle gearbox, the heat exchanger of the cooling system according to the invention may be fully integrated into the front axle support, or bolted to a machined surface of the front axle gearbox in the front axle support.

Preferably, the heat exchanger is situated near to the hottest place of the component, for instance the gearbox. The exchanger is flushed with oil provided by the hydraulic system of a drive line of the vehicle which anyhow needs to be cooled and therefore is provided with an oil cooling circuit including a radiator. The cooling layout of the drive line should cover all the engine provided power that can be driven through. Therefore, there is no difference whether the source of heat is fully the drive line or distributed to the drive line and other additional components like the front or rear PTO. The source of the heat has no influence on the general heat balance.

The heat exchanger is designed to avoid any direct contact between oil coming from the drive line and used for cooling, and oil or other liquids contained in the component to be cooled. This keeps the systems of drive line and of the components closed. This is advantageous in that for instance in cases wherein the component to be cooled contains lubricating oil, the oil level within the component may be reduced to an optimum to reduce the power losses in the component to a minimum, while an optimal cooling of the component is maintained by the cooling system of the present invention.

One of the advantages of the present invention is constituted by the fact that the performance of the component heat exchanger of the cooling system does not decrease, even if the component becomes dirty. In view of the integration of the component cooling system into the primary drive line cooling system, any possible overheating of the components can be signalled at one position. Further, the number of required additional parts is small.

Additionally, the radiator package to be cleaned is smaller, since no additional radiators are required.

Further advantageous features and details of the invention will become obvious on reading the following detailed but non-limiting description of embodiments of the invention with reference to the drawings.

In the drawings:
Fig. 1 shows a schematic representation of an example of the use of an embodiment of the active cooling system according to the present invention;
Fig. 2a to 2d show a first embodiment of the active cooling system according to the present invention;
Fig. 3a to 3c show a second embodiment of the active cooling system according to the present invention; and
Fig. 4a to 4d show a third embodiment of the active cooling system according to the present invention.

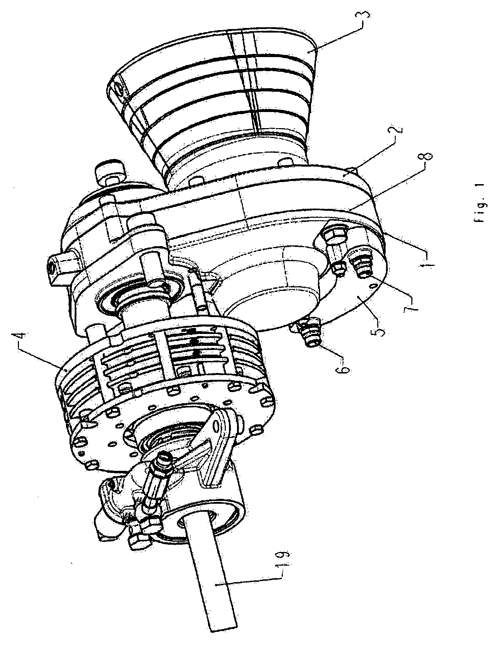

In Figure 1, an example for the possible use of an active cooling system for drive components of a vehicle is shown. This embodiment comprises a front power take-off (PTO) arrangement at the front axle of a tractor. This power take-off system generally comprises a gearbox 1 having a protective cone 3 surrounding the output shaft (not shown) of the front PTO and further including an input shaft 19 coupled via a clutch 4 to the gearbox 1.

The gearbox 1 comprises a housing portion 2 covered by a cover 8 which also may be unitary with the gearbox housing portion 2.

Such a front power take-off, similar to other components of a vehicle, like rear power take-off (PTO) arrangement, the differential drive or any other gearboxes, may be subjected to heavy loads and tend to overheat.

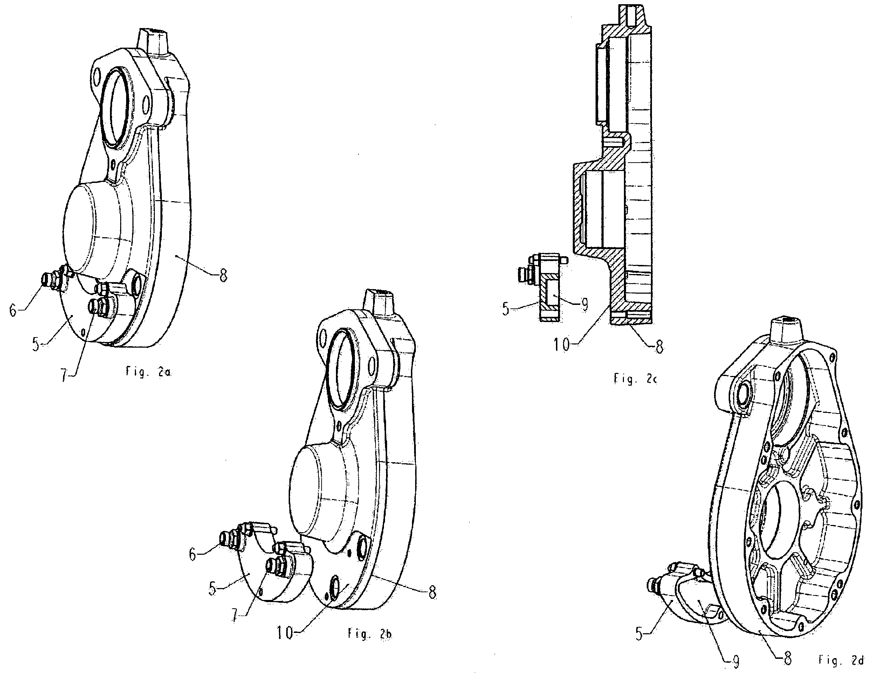

To mitigate this problem, an active cooling system comprising, in the embodiment shown in Figs. 1 and 2, a cooling cavity 9 formed within a heat exchanger housing 5 and being arranged in heat exchanging relationship with the component 1 to be cooled. The cavity 9 may be provided with cooling ribs or other means (not shown) for enhancing the heat flow from the surface to be cooled to the oil flowing through the cavity 9. The heat exchanger housing 5 is provided with inlet and outlet fittings 6, 7 to be connected via suitable tubes or hoses (not shown) into the at least one existing oil cooling circuit provided in the vehicle for cooling for instance the main gearbox of the drive line of the vehicle. Thus, the heat exchanger housing 5 is coupled into the at least one existing oil circuit, for instance in series with or in parallel to the main gearbox and in series with a radiator of the vehicle (not shown) cooled by natural or forced air flow.

In general, the heat exchanger of the component to be cooled may be connected into the existing oil cooling circuit in series with or in parallel to the device for which this existing oil cooling circuit is provided. If a parallel connection is intended, means like flow restrictors or valves for controlling the distribution of the cooling oil between the device for which this existing oil cooling circuit is provided and heat exchanger of the component to be cooled may be connected into the circuit. Further, the heat exchanger of the component to be cooled may be connected in series between the radiator and the sump of the oil cooling circuit.

In the embodiment shown in Fig. 2, the heat exchanger 5 is bolted and sealed to a machined outer surface 10 of the cover 8 of the front PTO gearbox 1 or any other component to be cooled so that the cavity 9 is closed by the machined surface 10 forming an oil space fully separated from the oil within the PTO gearbox 1.

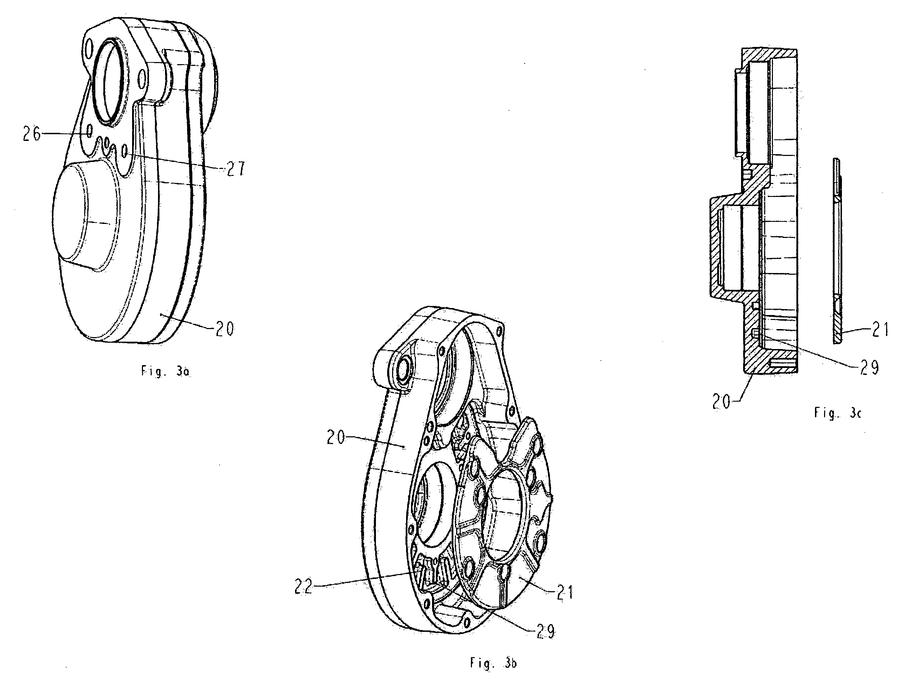

In the embodiment shown in Fig. 3, the separate heat exchanger housing 5 of the embodiment of Fig. 2 is replaced by a cavity 29 within a housing portion 20 of the front PTO gearbox or any other component to be cooled, and this cavity 29 is provided with cooling rib formations 22 for improving the heat exchange between the PTO gearbox 1 and the oil flowing in at least one existing oil circuit provided anyhow on the vehicle. Further, the cavity 29 is sealingly closed by a substantially annular cover plate 21 covering the cavity 29 on the side thereof facing to the inside of the PTO gearbox. As may be seen from Fig. 3A, the PTO gearbox cover portion 20 is provided with ports 26, 27 for receiving similar fittings as the heat exchanger 5 of the embodiment of Fig. 2, to allow for connecting the heat exchanger formed by the cavity 29 and the cover plate 21 into the primary oil circuit.

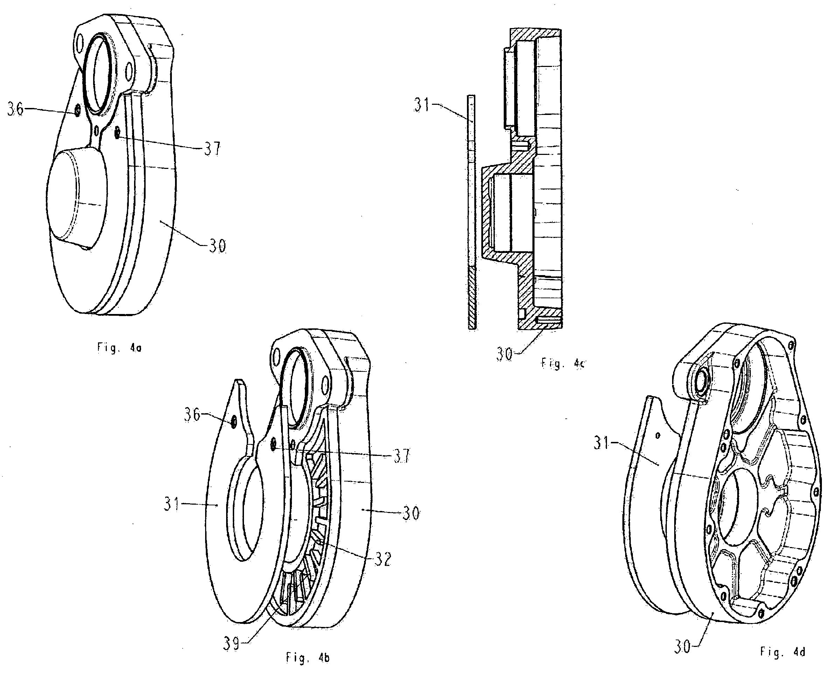

In Fig. 4, a third embodiment of the heat exchanger is shown, wherein the heat exchanger is formed by a cavity 39 in a housing portion 30 of the PTO gearbox. The cavity 39 again is provided with ribs 32 and is closed by a cover plate 31 which is again is provided with ports 36, 37 receiving fittings for connecting the cavity 39 into the primary oil circuit.

In all the embodiments, the cooling oil circuit is fully separated from the oil or lubricating agent cavity within the component to be cooled so that the amount of oil or lubricating agent within the PTO gearbox may be selected without regard to any cooling action thereof.

The cooling action is directly obtained by means of the heat exchanger formed either as bolted-on part of the component to be cooled or as an integral part thereof and being disposed at a portion of this component which, in use, is the hottest part thereof.

On reading the above description, it should be understood that the use of the heat exchanger shown in Figs. 1 to 4 only constitutes an example, and that similar heat exchangers may be provided at any component of a vehicle wherein heat is produced so that this heat may be dissipated by the heat exchanger to the radiator of at least one existing oil cooling circuit provided anyhow on the vehicle.

## Claims

1. Active cooling system for drive components (1) of vehicles comprising at least one oil cooling circuit transporting the heat from a drive line of the vehicle to a radiator mounted to the vehicle and cooled by natural or forced air flow, a heat exchanger system is provided for additional drive components of the vehicle wherein in use heat is produced, said heat exchanger system including a cavity (29) connected into the at least one oil cooling circuit of the drive line and in fluid isolation from any fluids within the housing (20) of the additional drive component (1), said cavity (29) being arranged in heat exchanging relationship with the component (1) to be cooled; and
**characterized in that** the component (1) to be cooled includes a housing comprising an outer housing member (20) having the cavity (29) formed therein which is separated from the inner space of the housing and provided with fittings (26, 27) for connecting the heat exchanger formed thereby into the at least one oil cooling circuit; and said cavity (29) is formed on the inner side of a housing portion (20) of the component (1) to be cooled and is sealingly closed by a cover plate (21) covering the cavity (29) on the side thereof facing to the inside of the component (1).

2. Cooling system according to any of the claim 1 , **characterized in that** the cavity (29) is provided with cooling rib formations (22) for improving the heat exchange between component (1) to be cooled and the oil flowing in the primary oil circuit and through the heat exchanger.

3. Cooling system according to any of the preceding claims, **characterized in that** the heat exchanger of the component (1) to be cooled is connected into the at least one oil cooling circuit in series with to the device for which this existing oil cooling circuit is provided.

4. Cooling system according to any of the claims 1 to 2, **characterized in that** the heat exchanger of the component (1) to be cooled is connected into the at least one oil cooling circuit in parallel to the device for which this existing oil cooling circuit is provided.

5. Cooling system according to claim 4, **characterized by** means for controlling the distribution of the cooling oil between the device for which the at least one oil cooling circuit is provided and heat exchanger of the component to be cooled.

6. Cooling system according to any of the claims 1 to 3, **characterized in that** the heat exchanger of the component to be cooled is connected in series between the radiator and the sump of the at least one oil cooling circuit.

7. Cooling system according to any of the claims 1 to 6, **characterized in that** said at least one oil cooling circuit is a primary oil cooling circuit transporting heat from the main drive line to a radiator mounted to the vehicle.

8. Cooling system according to claim 7, **characterized in that** main drive line comprises a main gearbox of the vehicle.

9. Cooling system according to any of the claims 1 to 8, **characterized in that** the component to be cooled is a front or rear power take-off (PTO) arrangement (1) of an industrial or agricultural vehicle.

10. Cooling system according to any of the claims 1 to 8, **characterized in that** the component to be cooled is a differential gearbox arrangement of an industrial or agricultural vehicle.

11. A method of active cooling for drive components (1) of vehicles comprising at least one oil cooling circuit transporting the heat from a drive line of the vehicle to a radiator mounted to the vehicle and cooled by natural or forced air flow, **characterized in that** said method comprises:
providing a heat exchanger system for additional drive components of the vehicle wherein in use heat is produced, said heat exchanger system including a cavity (9; 29; 39);
connecting said cavity into the at least one oil cooling circuit of the drive line and in fluid isolation from any fluids within the housing (2; 20; 30) of the additional drive component (1);
arranging said cavity (9; 29; 39) in heat exchanging relationship with the component (1) to be cooled;
including in the component (1) to be cooled a housing comprising an outer housing member (20) having the cavity (29) formed therein which is separated from the inner space of the housing and provided with fittings (26, 27) for connecting the heat exchanger formed thereby into the at least one oil cooling circuit; and
forming said cavity (29) on the inner side of a housing portion (20) of the component (1) to be cooled and sealingly closing the cavity (29) by a cover plate (21) on the side thereof facing to the inside of the component (1).

## Patentansprüche

1. Aktives Kühlsystem für Antriebskomponenten (1) eines Fahrzeuges, mit zumindest einem Kühlkreis, der die Wärme von einem Antriebsstrang des Fahrzeuges zu einem Kühler transportiert, der an dem Fahrzeug befestigt und durch natürliche oder erzwungene Luftströmung gekühlt wird, wobei ein Wärmetauscher-System für zusätzliche Antriebskomponenten des Fahrzeuges, in denen Wärme erzeugt wird, vorgesehen ist, wobei das Wärmetauscher-System einen Hohlraum (29) einschließt, der in den zumindest einen Ölkühler-Kreis des Antriebsstranges und in Fluid-Isolation gegenüber irgendwelchen Fluiden innerhalb des Gehäuses (20) der zusätzlichen Antriebskomponente (1) eingeschaltet ist, wobei der Hohlraum (29) in einer Wärmetauscher-Beziehung mit der zu kühlenden Komponente (1) angeordnet ist; und
**dadurch gekennzeichnet, dass** die zu kühlende Komponente (1) ein Gehäuse einschließt, das einen äußeren Gehäuseteil (20) umfasst, in dem der Hohlraum (29) ausgebildet ist, der von dem Innenraum des Gehäuses getrennt und mit Anschlüssen (26, 27) zum Verbinden des dadurch gebildeten Wärmetauschers mit dem zumindest einen Ölkühler-Kreis versehen ist; wobei der Hohlraum (29) auf der Innenseite eines Gehäuseteils (20) der zu kühlenden Komponente (1) ausgebildet und unter Abdichtung durch eine Abdeckplatte (21) verschlossen ist, die den Hohlraum (29) auf dessen auf die Innenseite der Komponente (1) gerichteten Seite abdeckt.

2. Kühlsystem nach Anspruch 1, **dadurch gekennzeichnet, dass** der Hohlraum (29) mit Kühlrippen-Formationen (22) versehen ist, um den Wärmetausch zwischen der zu kühlenden Komponente (1) und dem Öl zu verbessern, das in dem primären Ölkreis und durch den Wärmetauscher strömt.

3. Kühlsystem nach einem der vorhergehenden Ansprüche, **dadurch gekennzeichnet, dass** der Wärmetauscher der zu kühlenden Komponente (1) in dem zumindest einen Ölkühler-Kreis in Serie mit dem Gerät geschaltet ist, für das dieser vorhandene Ölkühler-Kreis vorgesehen ist.

4. Kühlsystem nach einem der Ansprüche 1 bis 2, **dadurch gekennzeichnet, dass** der Wärmetauscher der zu kühlenden Komponente (1) in dem zumindest einen Ölkühler-Kreis parallel zu dem Gerät eingeschaltet ist, für das dieser vorhandene Ölkühler-Kreis vorgesehen ist.

5. Kühlsystem nach Anspruch 4, **gekennzeichnet durch** Einrichtungen zur Steuerung der Verteilung des Kühlöls zwischen dem Gerät, für das der zumindest eine Ölkühler-Kreis vorgesehen ist, und dem Wärmetauscher der zu kühlenden Komponente.

6. Kühlsystem nach einem der Ansprüche 1 bis 3, **dadurch gekennzeichnet, dass** der Wärmetauscher der zu kühlenden Komponente in Serie zwischen dem Kühler und dem Sumpf des zumindest einen Ölkühler-Kreises eingeschaltet ist.

7. Kühlsystem nach einem der Ansprüche 1 bis 6, **dadurch gekennzeichnet, dass** der zumindest eine Ölkühler-Kreis ein primärer Ölkühler-Kreis ist, der Wärme von dem Hauptantriebsstrang an einen an dem Fahrzeug befestigten Kühler transportiert.

8. Kühlsystem nach Anspruch 7, **dadurch gekennzeichnet, dass** der HauptAntriebsstrang ein Hauptgetriebe des Fahrzeuges umfasst.

9. Kühlsystem nach einem der Ansprüche 1 bis 8, **dadurch gekennzeichnet, dass** die zu kühlende Komponente eine vordere oder hintere Zapfwellen-(PTO-)Anordnung (1) eines industriellen oder landwirtschaftlichen Fahrzeuges ist.

10. Kühlsystem nach einem der Ansprüche 1 bis 8, **dadurch gekennzeichnet, dass** die zu kühlende Komponente eine Differentialgetriebe-Anordnung eines industriellen oder landwirtschaftlichen Fahrzeuges ist.

11. Ein Verfahren zur aktiven Kühlung von Antriebskomponenten (1) von Fahrzeugen, die zumindest einen Ölkühler-Kreis umfassen, der Wärme von einem Antriebsstrang des Fahrzeuges zu einem Kühler transportiert, der an dem Fahrzeug befestigt und durch natürliche oder erzwungene Luftströmung gekühlt wird, **dadurch gekennzeichnet, dass** das Verfahren Folgendes umfasst:
Bereitstellen eines Wärmetauscher-Systems für zusätzliche Antriebskomponenten des Fahrzeuges, in denen im Gebrauch Wärme erzeugt wird, wobei das Wärmetauscher-System einen Hohlraum (9; 29; 39) einschließt;
Verbinden des Hohlraumes in den zumindest einen Ölkühler-Kreis des Antriebsstranges und in Fluid-Isolation von irgendwelchen Fluiden innerhalb des Gehäuses (2; 20; 30) der zusätzlichen Antriebskomponente (1);
Anordnen des Hohlraumes (9; 29; 39) in Wärmetauscher-Beziehung mit der zu kühlenden Komponente (1);
Einschließen der zu kühlenden Komponente (1) in ein Gehäuse, das einen äußeres Gehäuseteil (20) mit dem darin ausgebildeten Hohlraum (29) aufweist, der von dem Innenraum des Gehäuses getrennt und mit Anschlüssen (26, 27) zum Verbinden des hierdurch gebildeten Wärmetauschers in den zumindest einen Ölkühler-Kreis versehen ist; und
Ausbilden des Hohlraumes (29) auf der Innenseite des Gehäuseteils (20) der zu kühlenden Komponente (1) unter abgedichtetem Verschließen des Hohlraumes (29) durch eine Abdeckplatte (21) auf der Seite des Hohlraumes, die auf die Innenseite der Komponente (1) gerichtet ist.

## Revendications

1. Système actif de refroidissement pour des composants d'entraînement (1) de véhicules comprenant au moins un circuit de refroidissement d'huile transportant la chaleur depuis une transmission du véhicule vers un radiateur monté sur le véhicule et refroidi par une circulation d'air naturelle ou forcée, un système d'échangeur de chaleur étant prévu pour des composants additionnels d'entraînement du véhicule dans lesquels de la chaleur est produite en service, ledit système d'échangeur incluant une cavité (29) connectée dans le au moins un circuit de refroidissement d'huile de la transmission et étant isolée fluidiquement de tous fluides présents à l'intérieur du carter (20) du composant d'entraînement additionnel (1), ladite cavité (29) étant disposée dans une relation d'échange de chaleur avec le composant (1) à refroidir, et
**caractérisé en ce que** le composant (1) à refroidir inclut un carter comprenant un élément de carter extérieur (20) renfermant la cavité (29) façonnée à l'intérieur de celui-ci qui est séparée de l'espace intérieur du carter et pourvue de raccords (26, 27) pour connecter l'échangeur de chaleur formé ainsi dans le au moins un circuit de refroidissement d'huile,
et ladite cavité (29) est façonnée sur le côté intérieur d'une partie de carter (20) du composant (1) à refroidir et est fermée hermétiquement par une plaque de recouvrement (21) recouvrant la cavité (29) sur le côté de celle-ci faisant face à l'intérieur du composant (1).

2. Système de refroidissement selon la revendication 1, **caractérisé en ce que** la cavité (29) est pourvue d'agencements de nervures de refroidissement (22) pour améliorer l'échange de chaleur entre le composant (1) à refroidir et l'huile s'écoulant dans le circuit d'huile primaire et au travers de l'échangeur de chaleur.

3. Système de refroidissement selon l'une quelconque des revendications précédentes, **caractérisé en ce que** l'échangeur de chaleur du composant (1) à refroidir est connecté dans le au moins un circuit de refroidissement d'huile en série avec le dispositif pour lequel ce circuit de refroidissement d'huile existant est prévu.

4. Système de refroidissement selon l'une quelconque des revendications 1 ou 2, **caractérisé en ce que** l'échangeur de chaleur du composant (1) à refroidir est connecté dans le au moins un circuit de refroidissement d'huile en parallèle avec le dispositif pour lequel ce circuit de refroidissement d'huile existant est prévu.

5. Système de refroidissement selon la revendication 4, **caractérisé en ce qu'**il comprend des moyens pour régler la distribution de l'huile de refroidissement entre le dispositif pour lequel le au moins un circuit de refroidissement d'huile est prévu et l'échangeur de chaleur du composant à refroidir.

6. Système de refroidissement selon l'une quelconque des revendications 1 à 3, **caractérisé en ce que** l'échangeur de chaleur du composant à refroidir est connecté en série entre le radiateur et le collecteur du au moins un circuit de refroidissement d'huile.

7. Système de refroidissement selon l'une quelconque des revendications 1 à 6, **caractérisé en ce que** le dit au moins un circuit de refroidissement d'huile est un circuit primaire de refroidissement d'huile transportant la chaleur depuis la transmission principale vers un radiateur monté sur le véhicule.

8. Système de refroidissement selon la revendication claim 7, **caractérisé en ce que** la transmission principale comprend une boîte de transmission principale du véhicule.

9. Système de refroidissement selon l'une quelconque des revendications 1 à 8, **caractérisé en ce que** le composant à refroidir est un agencement (1) de prise de force (PTO) avant ou arrière d'un véhicule industriel ou agricole.

10. Système de refroidissement selon l'une quelconque des revendications 1 à 8, **caractérisé en ce que** le composant à refroidir est un agencement de réducteur différentiel d'un véhicule industriel ou agricole.

11. Procédé de refroidissement actif pour des composants d'entraînement (1) de véhicules comprenant au moins un circuit de refroidissement d'huile transportant la chaleur depuis une transmission du véhicule vers un radiateur monté sur le véhicule et refroidi par une circulation d'air naturelle ou forcée, **caractérisé en ce que** ledit procédé consiste à :
prévoir un système d'échangeur de chaleur pour des composants additionnels d'entraînement du véhicule produisant de la chaleur en service, ledit échangeur de chaleur incluant une cavité (9, 29, 39),
connecter ladite cavité dans le au moins un circuit de refroidissement d'huile et en isolation de fluide par rapport à tous fluides présents à l'intérieur du carter (2, 20, 30) du composant d'entraînement additionnel (1),
agencer ladite cavité (9, 29, 39) dans une relation d'échange de chaleur avec le composant (1) à refroidir,
inclure dans le composant (1) à refroidir un carter comprenant un élément de carter extérieur (20) renfermant la cavité (29) façonnée dans celui-ci qui est séparée de l'espace intérieur du carter et est pourvue de raccords (26, 27) pour connecter l'échangeur de chaleur ainsi formé dans le au moins un circuit de refroidissement d'huile, et
former la dite cavité (29) sur le côté intérieur d'une partie de carter (20) du composant (1) à refroidir et fermer hermétiquement la cavité (29) par une plaque de recouvrement (21) sur le côté de celle-ci faisant face à l'intérieur du composant (1).
